# EUROPEAN PATENT SPECIFICATION

(11) **EP 4 098 102 B1**
(45) Date of publication and mention of the grant of the patent: **28.01.2026**
(21) Application number: 21212224.6
(22) Date of filing: 03.12.2021
(51) Int. Cl.: A01G 3/00

(54) **SHREDDER APPARATUS**
ZERKLEINERUNGSVORRICHTUNG
DÉCHIQUETEUR

(30) Priority: 21.12.2020 CN 202023102169 U; 23.03.2021 CN 202110306249
(43) Date of publication of application: 07.12.2022
(73) Proprietor: Techtronic Cordless GP, Anderson, SC 29621 (US)
(72) Inventor: LEE, Wai Chung, Kwai Chung (HK); CHUNG, Koon For, Kwai Chung (HK); WU, Kun Hao, Dongguan City (CN); LAN, Xiao Di, Dongguan City (CN); WANG, Yan Jia, Dongguan City (CN)
(74) Representative: Zimmermann & Partner Patentanwälte mbB

(56) References cited:
- EP-A1- 1 724 209
- EP-A1- 2 071 936
- CN-B- 102 500 456
- DE-U1- 202020 002 588
- FR-A1- 2 631 778

## Description

### Technical Field

The present invention relates to the field of power tools, and in particular to a shredding device according to the preamble of claim 1.

### Background Art

Undesirable waste will be generated in some scenarios. For example, in gardens, lawns or places with other specific purposes, some undesirable tree branches, fallen leaves, etc. will be generated. Especially for some types of large-sized waste, it is desirable to shred it before removal, to reduce its size to facilitate further treatment.

Existing shredding machines for treating such waste have disadvantages in many aspects, such as unsatisfactory shredding results, designs that are not compact enough, inconvenience in storage and transportation, inability to handle scraps well, and unsatisfactory performance in flexibility, safety, etc.

A shredding device according to the preamble of claim 1 is known from DE 20 2020 002588 U1, which refers to a portable shredder having a rechargeable battery that is detachably arranged on the container. When the cutting head is attached to the container with the battery attached, the electric contact between the battery and a switch for driving the electric motor is automatically established. If the cutting head is detached from the container, it cannot be powered. The battery might be recessed into the container and installed in a detachable manner from above or from the side of from below.

### Brief Summary of the Invention

Targeting one or more technical disadvantages in prior art, the present invention provides a shredding device according to claim 1. Preferred embodiments are provided in the dependent claims.

The shredding device according to one or more embodiments of the present invention has several advantages. For example, the shredding device according to one or more embodiments of the present invention is safe and easy to operate. For another example, the shredding device according to one or more embodiments of the present invention features a compact structure and is easy to operate, store and transport. For another example, the shredding device according to one or more embodiments of the present invention facilitates protection of one or more components within it, so has a longer service life and is convenient and safe to operate. For another example, with the shredding device according to one or more embodiments of the present invention, it is easy to monitor the status of shredded materials, and treatment of shredded materials is improved.

More embodiments and beneficial technical effects of the present invention will be described in detail below.

### Brief Description of the Drawings

Figure 1A is a schematic diagram of the shredding device according to some embodiments of the present invention.
Figure 1B is a schematic exploded view of the shredding device shown in Figure 1A.
Figure 1C is a top view of the shredding device shown in Figure 1A.
Figure 1D is a back view of the shredding device shown in Figure 1A.
Figure 2 is a schematic diagram of the power supply chamber of the shredding device shown in Figure 1A.
Figure 3 is a schematic diagram of the rotation of the power supply cover of the shredding device shown in Figure 1A.
Figure 4 is a schematic diagram of a power supply device that can be used for the shredding device shown in Figure 1A.
Figure 5A is a schematic diagram of one status of the shredding body of the shredding device shown in Figure 1A.
Figure 5B is a schematic diagram of another status of the shredding body of the shredding device shown in Figure 1A.
Figure 6A is a schematic diagram of the locking mechanism of the shredding device shown in Figure 1A.
Figure 6B is a schematic diagram of one status of the locking mechanism shown in Figure 6A.
Figure 6C is a schematic diagram of another status of the locking mechanism shown in Figure 6A.
Figure 7A is a schematic diagram of the mechanism used to receive accessory tools of the shredding device shown in Figure 1A.
Figure 7B is a schematic diagram of an accessory tool accommodated in the mechanism shown in Figure 7A.
Figure 7C is a schematic diagram of another accessory tool.
Figure 8 is a schematic diagram of one part of the positioning mechanism of the shredding device shown in Figure 1A.
Figure 9A is a schematic diagram of the shredding device according to some other embodiments of the present invention.
Figure 9B is a schematic cross-sectional view of one part of the shredding device shown in Figure 9A.
Figure 10 is a schematic diagram of the locking mechanism according to some embodiments of the present invention.
Figure 11A is a schematic diagram of the shredding body in the locked status according to some embodiments of the present invention.
Figure 11B is a schematic diagram of the shredding body in the unlocked status according to some embodiments of the present invention.
Figure 12 is a schematic diagram of the safety switch according to some embodiments of the present invention.
Figure 13 is a schematic diagram of the displacing mechanism according to some embodiments of the present invention.
Figure 14 is a schematic diagram of the displacing mechanism according to some other embodiments of the present invention.

### Detailed Description of the Embodiments

In order to facilitate the understanding of the present invention, a number of exemplary embodiments will be described below with reference to related drawings.

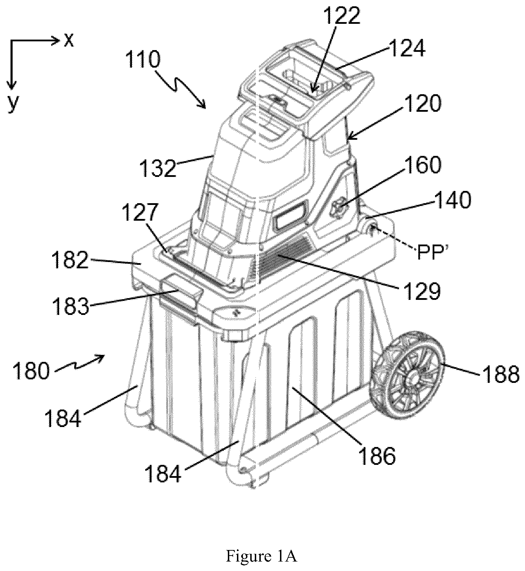

Figures 1A to 1D are schematic diagrams of the shredding device according to some embodiments of the present invention. The shredding device may be, for example, a shredder, equipment, machine, etc., used to treat or handle materials. The materials may be undesirable materials that appear in specific scenarios or places, such as garden waste, including but not limited to tree branches, fallen leaves, weeds, etc.

The shredding device comprises a shredding body 110 and a frame 180. The shredding body 110 is used to shred materials. The frame 180 is used to support the shredding body 110.

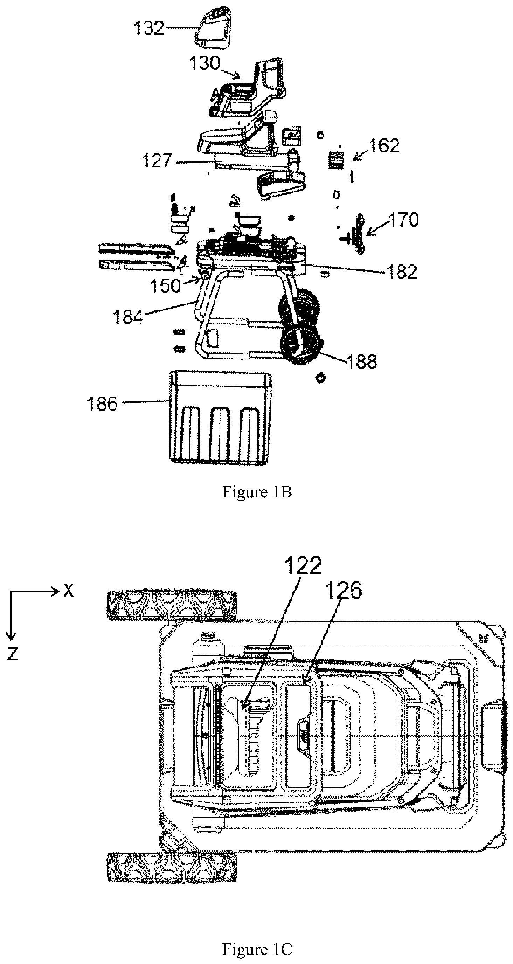

As illustrated in the drawings, the shredding body 110 comprises a housing 120. The housing 120 may be made of a suitable material (for example, plastics, metals or a combination thereof). The housing 120 may be formed as one piece or as an assembly of a plurality of individual pieces. The housing 120 is provided with an inlet 122, and a shredding mechanism 162 is provided in the housing 120 (Figure 1B). During operation, the materials can enter the housing 120 through the inlet 122 and are then treated by the shredding mechanism 162. The permissible track or path of the materials in the housing 120 can form a material passage or part of a material passage.

The frame 180 is essentially provided below the shredding body 110. The frame 180 may be set to a suitable configuration. As an example, the frame 180 comprises a supporting part 182, a bracket part 184, and a collecting part 186. The supporting part 182 is provided at the top of the frame 180, and at least part of it is positioned between the collecting part 186 and the shredding body 110 to connect the frame 180 with the shredding body 110. The bracket part 184 is provided at the periphery of the frame 180 and acts as the skeleton of the frame 180. The supporting part 182 and the bracket part 184 define a space, and the collecting part 186 may be provided in the space. The collecting part 186 is connected to at least part (for example, the material passage) of the shredding body 110, and is used to receive or accommodate treated materials. As an example, the collecting part 186 takes the form of a case or box. Other suitable forms are also possible.

The collecting part 186 may be fixedly installed in the space defined by the frame 180, or arranged as a non-detachable part of the frame 180. Optionally, the collecting part 186 may also be configured to be movably connected or detachably connected. For example, it can be removed from the frame 180. For example, in some embodiments, the collecting part 186 has a first status and a second status, and can switch between these two statuses. In the first status, the collecting part 186 is located in the space defined by the bracket part 184 and the supporting part 182, and in the second status, at least part of the collecting part 186 is located outside the space. This flexible design is beneficial to the operation of the shredding device. For example, when the materials in the collecting part 186 reach a certain amount, the collecting part 186 can be conveniently moved out of the space in whole or in part to facilitate the removal of the materials therein.

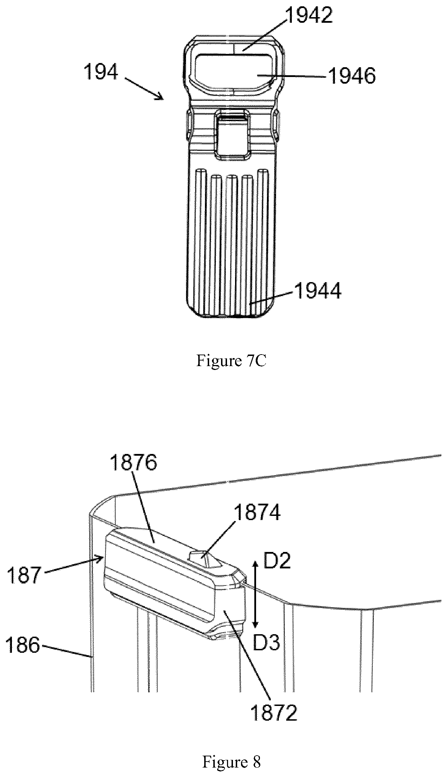

In some embodiments, the frame 180 further comprises a positioning mechanism 183 for positioning the collecting part 186. For example, when the collecting part 186 is in the first status, the positioning mechanism can position or fix the collecting part 186 relative to the frame 180. As an example, Figure 8 shows a part 187 of the positioning mechanism 183, which may be provided as part of the collecting part 186, or may be provided independently and attached to the collecting part 186. The part 187 of the positioning mechanism comprises a base 1872. The base 1872 is provided in a top area of the collecting part 186, and a first positioning member 1874 is provided thereon; the first positioning member 1874 is illustrated as a protruding part. A second positioning member (not shown) may be provided on the supporting part 182 at a position corresponding to the first positioning member 1874. The second positioning member may fit with the first positioning member 1874. For example, it may be a recessed part that engages with the protruding part. Thus, the collecting part 186 can be positioned or fixed.

Optionally, the first positioning member 1874 is movably provided. Being movably provided means that at least part of it can move, for example, be displaced relative to a stationary point. Taking Figure 8 as an example, an elastic member (not shown) may be provided in the base 1872, so that the protruding part can move along the direction indicated by the arrow D2 or D3. For example, the protruding part can move along the direction D3 to a position where it is flush with or lower than one side 1876 of the base 1872. For example, in the process of switching the collecting part 186 from the second status to the first status, the side 1876 may abut a bottom surface of the supporting part 182 during possible translation of the collecting part 186. The bottom surface of the supporting part 182 can press the protruding part into the base 1872 along the direction D3 until the recessed part of the supporting part 182 is aligned with the protruding part, and then the protruding part is displaced along the direction D2 into the recessed part and engages with it under the action of the elastic force of the elastic member, thereby preventing relative movement between the collecting part 186 and the supporting part 182.

In some other embodiments, the first positioning member may be a recessed part, and the second positioning member may be a protruding part. According to actual needs, other suitable forms of the positioning mechanism may be used.

The positioning mechanism is beneficial for operation stability. During the shredding operation, the collecting part may be displaced under forces (for example, vibration). This is undesirable, because, for example, it will cause deviation from the material passage, causing the treated materials to fall outside the collecting part. Displacement of the collecting part may also occur during movement of the shredding device. The use of a positioning mechanism can prevent or reduce undesired displacement of the collecting part in such processes.

In some embodiments, the frame 180 further comprises a travelling mechanism 188, being, for example, rollers. The travelling mechanism 188 is coupled to the bracket part 184 via an axle, for example, and this is advantageous for facilitating the movement of the shredding device in physical space. It can not only save labour, but it will also expand the applicability. For example, people whose physical strength is below a certain threshold may be enabled to operate the machine.

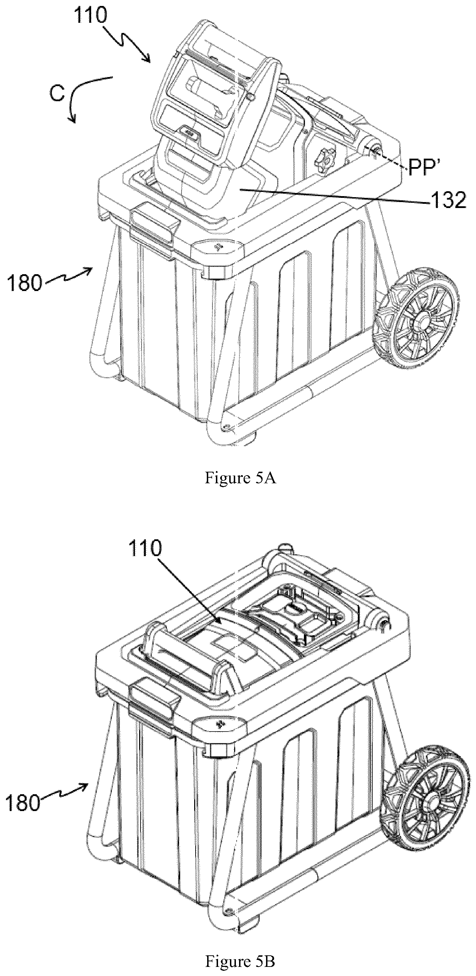

With reference to Figures 1A to 1D and 5A to 5B, in some embodiments, at least part of the shredding body 110 may be accommodated in the frame 180 (for example, in the collecting part 186). The position where the shredding body 110 is located on the frame 180 may be referred to as a first position (for example, Figure 1A), and the corresponding status may be referred to as the working status. The position where at least part of the shredding body 110 is accommodated in the frame 180 is referred to as a second position (for example, Figure 5B), and the corresponding status may be referred to as the accommodation status.

In the accommodation status, at least part (for example, most or all) of the shredding body 110 can be accommodated in the space of the frame 180, and this is advantageous for storage, transportation, etc. It not only saves space, but also protects the shredding body 110. For example, it can prevent water, chemical substances, atmosphere and other undesirable matter from entering or contacting the shredding body 110 or mitigate such entry or contact, which is helpful for protecting the mechanical parts or electrical components, circuits, etc. therein and can also thereby extend the service life of the shredding device.

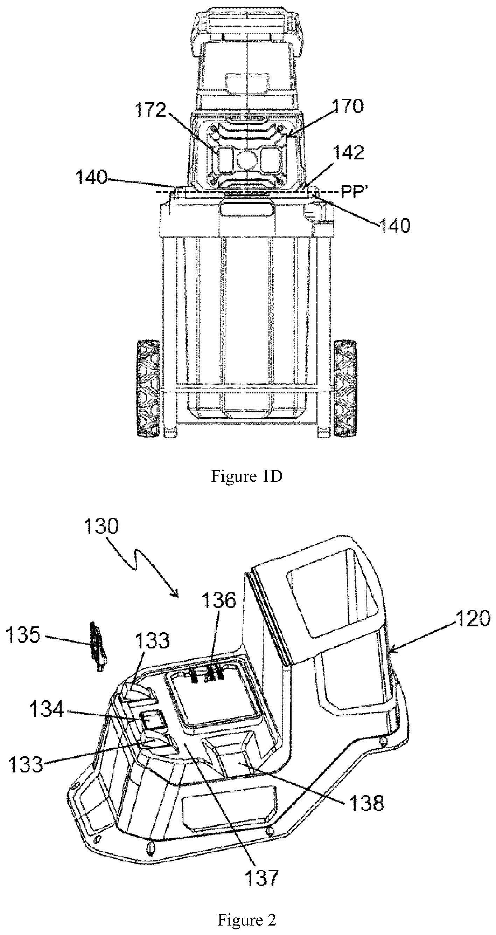

The shredding body 110 is configured to able to switch between the first position and the second position. As illustrated in Figures 5A and 5B, the shredding body 110 moves from the first position to the second position around the axis PP' in the direction C (as shown in Figure 1D, the axis PP' is the centre line of a shaft 142, and sometimes the axis PP' and the shaft 142 can be used interchangeably herein) . The switching can be achieved in a plurality of ways. As an example, the shredding device comprises a damping mechanism 140 to facilitate switching of the shredding body 110 between the first position and the second position. The damping mechanism 140 is, for example, a torsional spring. In this embodiment, a pair of torsional springs is provided on the supporting part 182. Specifically, the pair of torsional springs are respectively arranged at each end of the shaft 142 and coupled with the shaft 142 (although in some embodiments, coupling of the two is not necessary), allowing the shredding body 110 to rotate about the axis PP' in a certain angle range (for example, from 0° to 120°, especially from 0° to 90°). According to actual needs, other suitable methods may be used to set the damping mechanism, as long as it can facilitate the collapsing or rotation of the shredding body. Other types of damping mechanisms are, for example, a friction component, or a hydraulic cylinder, or the like.

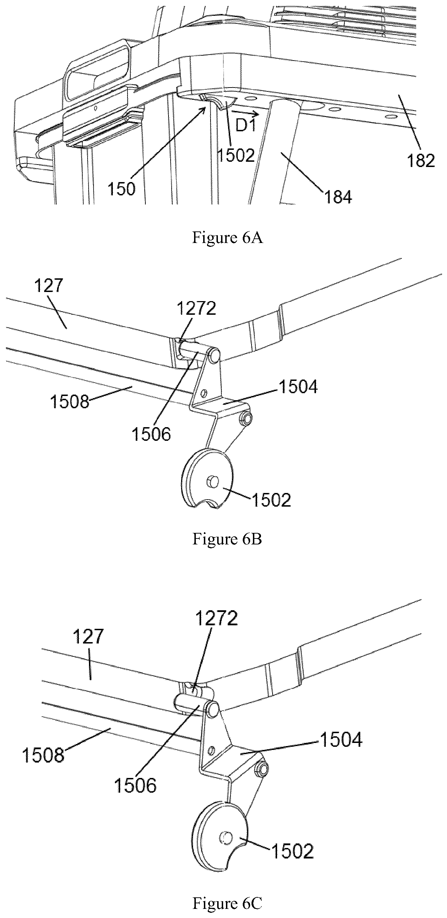

In some embodiments, as shown in Figures 1B and 6A to 6C, the shredding device comprises a locking mechanism 150 for locking the shredding body 110. The locking mechanism 150 has a first status and a second status. The first status is, for example, an unlocked status. In this status, the locking mechanism 150 allows the shredding body 110 to switch between the first position (for example, a working position in the working status) and the second position (for example, an accommodation position in the accommodation status). The second status is, for example, a locked status. In this status, the locking mechanism 150 prevents the shredding body from switching between the first position and the second position.

As shown in Figure 6A, the locking mechanism 150 can be operated in the direction D1 or the direction opposite to the direction D1, thereby placing the locking mechanism 150 in the first status or the second status. Figures 6B and 6C show an example of the locking mechanism 150, wherein, for the sake of simplicity, only some main relevant parts of the shredding device are shown.

As an example, the locking mechanism 150 can lock or unlock the supporting part 182 of the frame 180 and a chassis 127 of the shredding body 110. The locking mechanism 150 comprises a drive part 1502, a coupling part 1504, and a locking part 1506. The coupling part 1504 couples the drive part 1502 and the locking part 1506, so that the drive part 1502 operably drives the locking part 1506 to switch the locking mechanism 150 between the locked status and the unlocked status. The drive part 1502 is, for example, positioned below the shredding body 110, and preferably the drive part 1502 is located inside the contour of the frame. For example, the coupling part 1504 is pivotally mounted on the frame, and preferably at least part of the coupling part 1504 can go through the frame.

For example, in the manner illustrated, the drive part 1502 is coupled with the locking part 1506 via the coupling part 1504. The drive part 1502 is set in the form of a toggle switch; for example, when it is toggled in the opposite direction to D1, the coupling part 1504 rotates about a shaft 1508, driving the locking part 1506 into a receiving part or receiving structure 1272 (being, for example, a groove) of the chassis 127, thereby locking the chassis 127 with the supporting part 182 (Figure 6B). That is, in a certain sense, the receiving structure 1272 can be regarded as a structure that fits the locking part 1506. If the drive part 1502 is moved in the direction D1, the coupling part 1504 rotates in the opposite direction about the shaft 1508, thus moving the locking part 1506 out of the receiving part 1272, thereby unlocking the chassis 127 from the supporting part 182 and allowing the shredding body 110 to move relative to the frame 180.

Figures 6A to 6C are only one example of the locking mechanism 150. Other variations are possible. For example, the drive part 1502 may be a component that can be rotated or pressed, or can slide in translation. According to actual needs, other suitable forms of the locking mechanism may also be used, as long as at least part of the shredding body and at least part of the frame can be locked or unlocked. In some embodiments, the locking mechanism further comprises a reset device. The reset device is, for example, an elastic member. The reset device is, for example, configured as an elastic member which operably acts on either the coupling part or the drive part. The reset device operably resets the locking mechanism or keeps it in the locked status.

The locking mechanism can improve the operation stability and safety of the shredding device. For example, in the process of material treatment, it will be dangerous if the shredding body is displaced (for example, accidentally tilts towards the collecting part of the frame). The locking mechanism can prevent or reduce the occurrence of such incidents. In addition, with the locking mechanism, the shredding body can be more stably positioned on the frame, which is also beneficial to the material shredding result.

In addition, the locking mechanism according to one or more embodiments herein features a simple structure and a occupies a small space, so will not undesirably increase the complexity and volume of the device. Moreover, for the specific embodiment illustrated in Figures 6B to 6C, the lever principle is adopted, and only a small amount of force is required to operate it. The position of the locking mechanism in the shredding device also makes it easy to manipulate without affecting the appearance of the shredding device.

With reference to Figure 1A and 1B again, a motive power unit (not shown), for example, an electric machine or a motor, may be provided in the housing 120 to provide motive power to the shredding mechanism 162. The motor may be, for example, an external rotor motor, which can provide motive power output to the shredding mechanism 162 through a transmission mechanism.

The shredding device further comprises a power supply device, which provides electric power to the shredding body, for example, provides motive power to the electric machine. The housing 120 is provided with a power supply chamber 130 for accommodating at least part of the power supply device. In some embodiments, a power supply cover 132 is provided on the housing 120, and the power supply cover 132 seals the power supply chamber 130. The power supply cover 132 may be set independently, or as part of the housing 120 to make the design more compact and streamlined. The power supply cover 132 can protect the power supply device, for example, by preventing the external atmosphere from corroding the power supply device or preventing the power supply device from being damaged due to the action of undesirable external mechanical forces.

In some embodiments, the power supply device comprises at least one battery pack accommodated in the power supply chamber 130, and the power supply chamber 130 is arranged such that at least one long side of the battery pack accommodated therein extends along a first direction. In some embodiments, the battery pack provides DC power output at 18V, 20V, 36V, 40V, 58V, 60V, 72V or 80V. In some other embodiments, the power supply device further comprises an AC power interface and an input toggle switch used to select a battery pack or an AC power source for power supply. In some other embodiments, the shredding device can charge at least one battery pack by use of the AC power interface.

As shown in Figure 2, the power supply chamber 130 comprises an electrical contact part 136 for electrical communication with the power supply device accommodated in the power supply chamber 130. The power supply chamber 130 is also provided with a first area 137 that matches at least part of a surface of the power supply device. The first area 137 may be set, for example, as an inclined surface with a certain inclination with respect to the horizontal plane. When fluid (for example, water or steam condensate or other liquids) enters the power supply chamber 130, the inclined surface can direct the fluid to a desired position to prevent corrosion of the power supply device. In some embodiments, a collecting groove 138 is provided in the power supply chamber 130, and this can be used to collect the fluid diverted via the inclined surface.

In some embodiments, a safety interface 134 used to receive a safety component 135 is provided in the power supply chamber 130. The safety component 135 is, for example, a safety key. The power supply device is allowed to supply electric power to the shredding device when the safety component 135 is connected to the safety interface 134, and the power supply device is prevented from supplying electric power to the shredding device when the safety component 135 disengages from the safety interface 134 (as shown in Figure 2). This is helpful in preventing unexpected start-up of the power supply device, and can improve the safety of the shredding device.

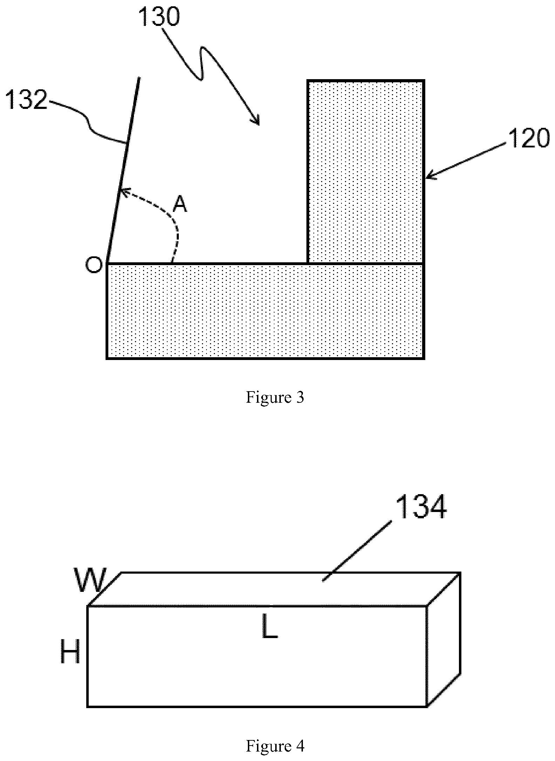

In some embodiments, a mounting part 133 used to mount the power supply cover 132 is also provided in the power supply chamber 130. The mounting part 133 allows changing of the relative positions of the power supply cover 132 and the power supply chamber 130. As illustrated in Figure 3, the power supply cover 132 can rotate about the axis O by an angle A (also referred to as the opening angle) in the direction of the arrow or the opposite direction to the arrow relative to the power supply chamber 130. The angle A ranges from 30° to 150° for example, and may be, for example, 30°, 60°, 80°, 90°, 120°, or 150°.

Hence, the power supply cover according to one or more embodiments herein has a large opening angle. This is advantageous for operating the power supply chamber. For example, without the need to remove the power supply cover, one or more components in the power supply chamber can be easily operated, for example, repaired, replaced, etc.

In addition, the design of the power supply chamber and the power supply cover according to one or more embodiments herein is compact and space-saving. This makes it possible to, for example, accommodate the shredding body in the collecting part without increasing the volume of the collecting part, which is cost-effective. Since there is no undesirable increase in the volume of the entire shredding device, it is also advantageous for storage, transportation, etc. In addition, the power supply cover is also aesthetically designed. Whether it is provided independently or as part of the housing, it appears to be integrated with the housing. With this streamlined design, there is essentially no additional gap at the junction with the housing, and it can functionally prevent the accommodation of undesired external matter, such as rainwater, foreign materials (such as debris), etc.

Figure 4 shows the battery pack 134. The battery pack 134 is an example of the power supply device, which can be accommodated in the power supply chamber 130 to provide electric power to the motive power unit. For ease of description, the battery pack 134 is shown as a cuboid with the length, width and height respectively represented by L, W and H, wherein L is greater than W and L is greater than H. In the shredding device, the battery pack 134 may be set in a vertical configuration or a horizontal configuration. In the vertical configuration, the long side L of the battery pack 134 extends along a first direction, for example, the direction essentially parallel to the direction y shown in Figure 1A. In the horizontal configuration, the long side L of the battery pack 134 extends along a second direction, for example, the direction essentially parallel to the direction z shown in Figure 1C. In other words, the long side L of the battery pack 134 is essentially parallel to the pivotal axis PP' of the shredding body 110.

In some embodiments, it is advantageous to adopt the horizontal configuration of the battery pack. In this way, for example, in the process of switching the shredding body 110 from the working status to the accommodation status (Figure 5A), no undesired obstruction will be caused. That is, the switching process can be completed without removing the battery pack. This is beneficial for improving the flexibility and convenience of operation of the shredding device.

With reference to Figures 1A and 1D again, in some embodiments, the shredding body 110 is also provided with a mechanism 160 for adjusting the shredding mechanism 162. The mechanism 160 can be rotated or pressed or operated in another suitable manner to adjust the shredding mechanism 162, for example, to adjust the size of at least part of the material passage. In some embodiments, the size can be characterized by operation space or operation clearance. The operation clearance is, for example, the distance between an operation panel and a rolling cutter. The mechanism 160 can operably increase or reduce the distance.

Over time, the operation clearance will change, which may lower the operation efficiency of the shredding device. In addition, for different types of materials, the expected operation clearance will be different. Therefore, it is usually necessary to adjust the operation clearance. This can be achieved, for example, by opening the housing and adjusting the cutter of the shredding device. However, this is troublesome and may cause drifting of the parameters of other components. The mechanism 160 can effectively prevent these shortcomings. The operation clearance can be adjusted conveniently and quickly through the operating mechanism 160, for example, by adjusting the operation panel.

In some embodiments, the housing 120 is further provided with a shielding mechanism 170 for shielding the shredding mechanism 162. The shielding mechanism 170 comprises, for example, a cover plate, which can prevent materials from flying out during operation, and can also prevent undesired external foreign materials from entering the housing. This is beneficial for protecting the safety of components inside and personnel outside.

As illustrated in Figure 1D, the shielding mechanism 170 is provided with a window 172, thereby allowing observation of at least part of the shredding mechanism 162 (for example, at least part of the inside). For example, without opening the shielding mechanism 170 or other housing parts, the status of the shredding mechanism 162, for example, whether the operation clearance needs to be adjusted, whether the materials are blocked, etc., can be easily ascertained through the window 172. In some embodiments, the window 172 is further provided with a window cover. When there is no need to observe the inside of the housing, the window cover covers the window 172 to increase safety.

In some embodiments, the housing 120 is provided with a gripping part 124. The gripping part 124 is, for example, arranged on the top of the housing 120 and close to the inlet 122. The gripping part 124 may be made of a suitable material (for example, plastics, metals or a combination thereof). The gripping part 124 may be provided as part of the housing 120, or provided independently and then attached to the housing 120. The gripping part 124 facilitates operation of the shredding device by personnel, for example, to push the shredding device to move in the physical space, to switch the shredding body between different positions relative to the collecting part, etc.

In some embodiments, a user interface or UI 126 (Figure 1C) is also provided on the housing 120, so as to facilitate interaction between the user and the shredding device. For example, the user interface 126 may display to the user one or more statuses of the shredding device, such as the battery level and blocking. For another example, the user interface 126 may allow the user to input one or more variables to manipulate the shredding device.

In some embodiments, the housing 120 of the shredding body 110 is provided with a heat dissipation mechanism 129. The heat dissipation mechanism 129 comprises, for example, one or more heat dissipation holes, which are used to dissipate heat generated by the motive power unit during operation. In some embodiments, the heat dissipation mechanism 129 further comprises a filtering mechanism. The filtering mechanism comprises, for example, one or more layers of filter screens, which are used to prevent air with undesirable impurities or other foreign materials from entering the housing 120 from the outside. This is beneficial for protecting the motive power unit and electronic circuits in the housing and improving safety.

In some embodiments, the shredding device comprises a mechanism used to receive accessory tools. The accessory tools include, for example, one or more of a wrench, a plunger, a screwdriver, pliers, screws, nuts and bolts. In some embodiments, the mechanism used to receive accessory tools comprises a space for accommodating at least part of the accessory tools, or a protruding part used to carry at least part of the accessory tools, or both.

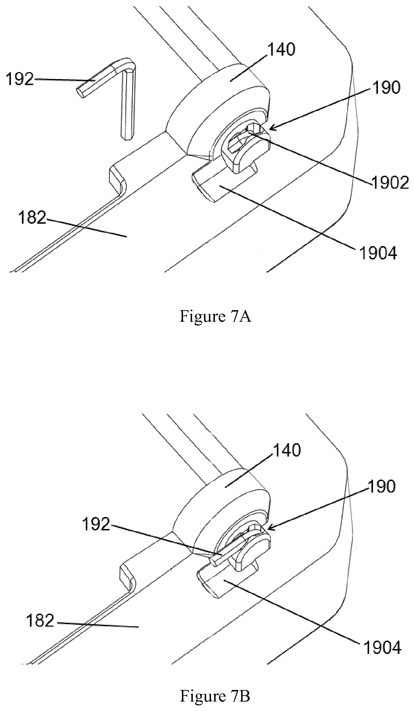

As an example, Figures 7A to 7B illustrate the mechanism 190 used to receive accessory tools. The mechanism 190 is provided on the supporting part 182 and is close to the elastic mechanism 140. The mechanism 190 defines a space 1902, being, for example, a slot. At least a part of an Allen wrench 192 can be accommodated in the slot (Figure 7B), thereby being stored on the shredding device. In some embodiments, a sunken part 1904 is further provided at one end of the wrench 192 so that the user's fingers can easily access or handle (for example, take out) the wrench 192.

Figure 7C shows a plunger 194. The plunger 194 comprises a handle 1942 and an operating part 1944, and defines a space 1946. The handle 1942 can be used for gripping. For example, part of the hand can pass through the space 1946 when holding the handle. The operating part 1944 can be used to contact the materials and to handle the contacted materials, for example, to adjust the position or status of the materials in the material passage, so that the materials can be better treated, or treated materials can better enter the collecting part.

The shredding device comprises a protruding part (not shown) for carrying at least part of the plunger 194. The protruding part may be provided at a suitable position of the housing 120 or the frame 180, for example, for interacting with the space 1946, for example, by passing through the space 1946, so as to suspend the plunger 194.

In some embodiments, the housing or supporting part of the shredding device is also provided with a storage mechanism for other accessory tools, for example, a groove or protrusion matching a tool to be stored, wherein the groove may be partially open or comprise a movable cover to form an enclosed space. The storage mechanism may be designed as an independent unit, or it may use or comprise part of the shredding device, or it may be a combination of the two, as long as it can be used to receive accessory tools. In other words, in a certain sense, the storage mechanism functions as a toolbox.

During operation (for example, running, maintenance, etc.) of the shredding device, one or more accessory tools may be needed. According to one or more embodiments herein, the accessory tools can be stored on the shredding device instead of in a separate toolbox. This is advantageous. For example, during outdoor use (for example, in a garden or on a farm), there is no need to carry an additional toolbox, and this avoids time cost, etc. in situations where accessory tools are needed but the toolbox is left behind.

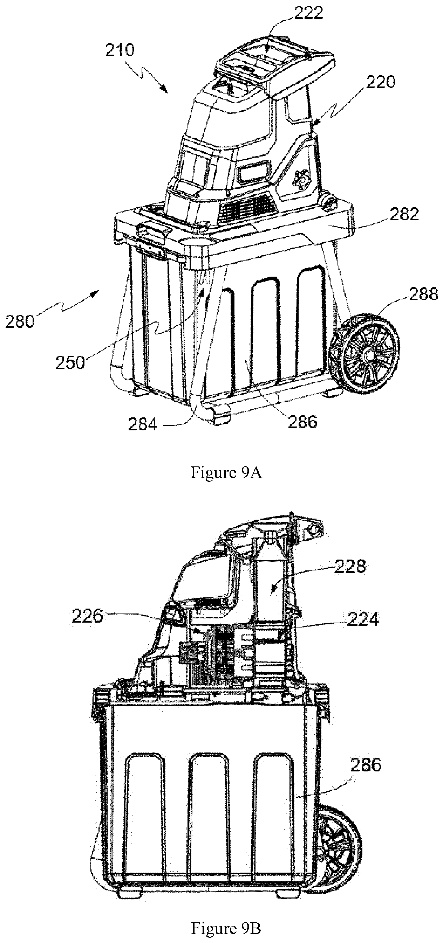

According to some other aspects of the present invention, Figure 9A is a schematic diagram of the shredding device according to some embodiments of the present invention. Figure 9B is a schematic cross-sectional view of one part of the shredding device shown in Figure 9A.

The shredding device may be, for example, a shredder, equipment, machine, etc., used to treat or handle materials. The materials may be undesirable materials that appear in specific scenarios or places, such as garden waste, including but not limited to tree branches, fallen leaves, weeds, etc.

The shredding device comprises a shredding body 210 and a frame 280. The shredding body 210 is used to shred materials. The frame 280 is used to support the shredding body 210.

As illustrated in the drawings, the shredding body 210 comprises a housing 120. The housing 220 may be made of a suitable material (for example, plastics, metals or a combination thereof). The housing 220 may be formed as one piece or as an assembly of a plurality of individual pieces. The housing 220 is provided with an inlet 222; a tool head 224, for example, a cutter, and a motive power unit 226 for providing motive power to the tool head 224 are provided in the housing 220. The motive power unit 226 is, for example, a motor. In some embodiments, the motor is an external rotor motor. A material passage 228 for conveying materials is provided in the housing 220. Materials enter the material passage 228 through the inlet 222, then reach the tool head 224, and are shredded by the tool head 224.

The motive power unit 226 may be powered by a DC power source or an AC power source. For example, the shredding device (for example, the housing 220) is provided with a battery chamber for accommodating a battery pack that provides DC power to the motive power unit 226. The shredding device is further provided with an interface for connection with an AC power grid. In some embodiments, the shredding device comprises a power switch component, and the power switch component operably allows the shredding device to receive DC power or AC power. The power switch component is, for example, a single-pole double-throw switch. The power switch component may also be, for example, a switch circuit consisting of a plurality of electronic elements (for example, transistors, etc.).

The frame 280 is essentially provided below the shredding body 210. The frame 280 may be set to a suitable configuration. As an example, the frame 280 comprises a supporting part 282, a bracket part 284, and a collecting part 286. The supporting part 282 is provided at the top of the frame 280, and at least part of it is positioned between the collecting part 286 and the shredding body 210 to connect the frame 280 with the shredding body 210. The bracket part 284 is provided at the periphery of the frame 280 and acts as the skeleton of the frame 280. The supporting part 282 and the bracket part 284 define a space, and the collecting part 286 may be provided in the space. The collecting part 286 is connected to the material passage 228 of the shredding body 210, and is used to receive or accommodate treated materials (i.e., shredded materials). As an example, the collecting part 286 takes the form of a case or box. Other suitable forms are also possible.

In some embodiments, the frame 280 further comprises a travelling mechanism 288, being, for example, rollers. The travelling mechanism 288 is coupled to the bracket part 284 via an axle, for example, and this is advantageous for facilitating the movement of the shredding device in physical space. It can not only save labour, but it will also expand the applicability. For example, people whose physical strength is below a certain threshold may be enabled to operate the machine.

In some embodiments, at least part of the shredding body 210 may be accommodated in the frame 280 (for example, in the collecting part 286). The status in which the shredding body 210 is located on the frame 280 may be referred to as a first status or the working status. The status in which at least part of the shredding body 210 is accommodated in the frame 280 is referred to as a second status or the accommodation status.

In the accommodation status, at least part (for example, most or all) of the shredding body 210 can be accommodated in the space of the frame 280, and this is advantageous for storage, transportation, etc. It not only saves space, but also protects the shredding body 210. For example, it can prevent water, chemical substances, atmosphere and other undesirable matter from entering or contacting the shredding body 210 or mitigate such entry or contact, which is helpful for protecting the mechanical parts or electrical components, circuits, etc. therein and can thereby also extend the service life of the shredding device.

The shredding body 210 can switch between the working status and the accommodation status. In some embodiments, as shown in Figure 9A, the shredding device further comprises a locking mechanism 250. The locking mechanism 250 is configured to operably place the shredding body 210 in a locked status or an unlocked status. In the locked status, the shredding body 210 is prevented from switching between the working status and the accommodation status, and in the unlocked status, the shredding body 210 is allowed to switch between the working status and the accommodation status.

In some embodiments, the motive power unit is a motor, and the motor features an automatic sleep mode. The motor can automatically switch between the automatic sleep mode and a working mode depending on a parameter (for example, the current drawn). The automatic sleep mode may be matched with the situation where there is no material to treat. The working mode may be matched with the situation where there are materials to treat (for example, where new materials enter the shredding device).

For example, in some embodiments, when the current drawn is equal to or smaller than a first current threshold or reaches a first time threshold, the rotation speed is automatically reduced to a first rotation speed or lower (i.e., the motor enters the automatic sleep mode); when the current drawn is equal to or greater than a second current threshold, the rotation speed is automatically increased to a second rotation speed or higher (i.e., the motor enters the working mode).

The first current threshold is, for example, in the range of 2A to 5A, specifically, for example, 2A, 2.5A, 3A, 3.5A, 4A, 4.5A, or 5A. The second current threshold is, for example, in the range of 8A to 50A, specifically, for example, 8A, 10A, 15A, 20A, 25A, 30A, 40A, 45A, or 50A. The first time threshold is, for example, in the range of 1s to 300s, specifically, for example, 1s, 5s, 10s, 60s, 180s, 220s, 280s, or 300s. The first rotation speed is, for example, in the range of 15RPM to 25RPM, specifically, for example, 15RPM, 18RPM, 20RPM, 23RPM, or 25RPM. The second rotation speed is, for example, in the range of 30RPM to 45RPM, specifically, for example, 30RPM, 35RPM, 40RPM, or 45RPM.

In some embodiments, the rotation speed of the motor may also be manually adjusted by the operator. In some embodiments, when the current drawn by the motor exceeds a certain value, a circuit automatically switches the power supply to the motor, thereby protecting the motor.

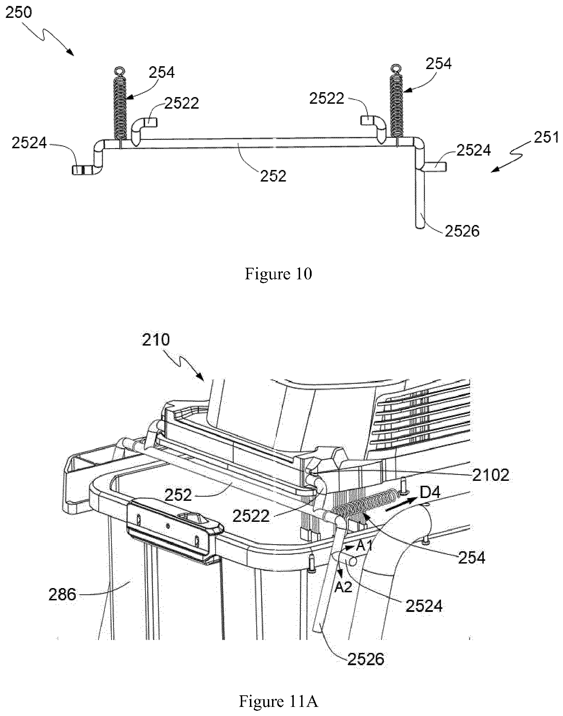

Figures 10 and 11A to 11B show non-limiting examples of the locking mechanism 250. The locking mechanism 250 comprises a pivoting member 251, and optionally, a reset device 254. The pivoting member 251 operably pivots relative to at least one point or at least one axis, thereby switching the shredding body 210 between the locked status and the unlocked status. The reset device 254 operably applies a force to the pivoting member 251 in a predetermined direction, so that the shredding body 210 tends to switch to the locked status or remain in the locked status. The reset device 254 is, for example, an elastic member.

As illustrated, the pivoting member 251 comprises a base 252. The base 252 is provided with a first branch 2522, a second branch 2524, and a third branch 2526. The first branch 2522 is operably coupled or decoupled with the shredding body 210, the second branch 2524 is configured to be coupled with the frame 280, and the third branch 2526 is configured as an operating end that can be operated by a user. One end of the reset device 254 is connected to the base 252.

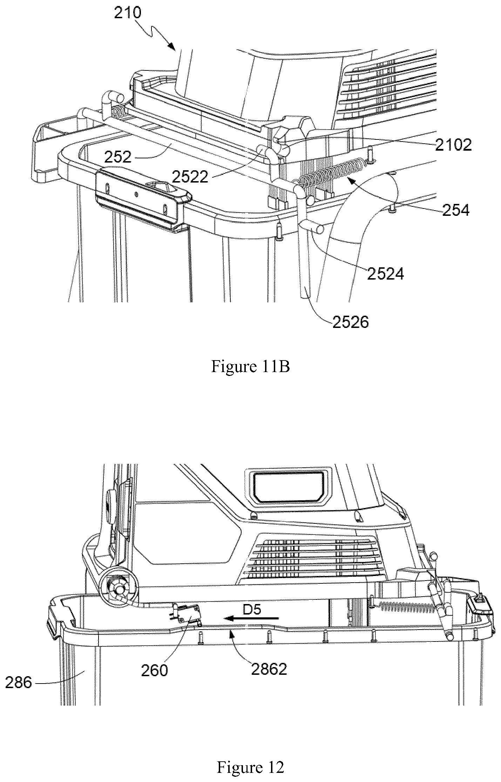

Figure 11A shows the locked status of the shredding body 210. Figure 11B shows the unlocked status of the shredding body 210. For the purpose of clearly showing the locking mechanism, some parts of the shredding device (for example, the supporting part 282) are hidden. As a non-limiting example, the locking mechanism is coupled to (for example, mounted to, joined with, or connected to) the supporting part 282 through the second branch 2524. The coupling may be a flexible connection or a fixed connection. For example, the second branch 2524 may be partially accommodated or snapped into a corresponding slot (not shown) of the supporting part 282, so that the pivoting member 251 can be mounted on the frame. The third branch 2526 serves as an operating end, which can be manually operated by a user or an operator, so that the pivoting member 251 can pivot about an axis along the length of the second branch 2524.

For example, when the user manipulates the third branch 2526 to pivot in the direction A1, the first branch 2522 rotates along with it and is accommodated in a receiving structure provided on the housing 220 of the shredding body 210, thereby placing the shredding body 210 in the locked status (Figure 11A). In this embodiment, the receiving structure is illustrated as a groove 2102, though the receiving structure may be configured in other suitable forms according to actual needs. In this status, the shredding body 210 and the frame 280 cannot move relative to each other. For example, the shredding body 110 cannot be accommodated in the frame 180. When the user manipulates the third branch 2526 to pivot in the direction A2, the first branch 2522 rotates along with it and leaves the groove 2102, thereby placing the shredding body 210 in the unlocked status (Figure 11B). In this status, the shredding body 210 and the frame 280 can move relative to each other. For example, the shredding body 210 can be accommodated in the frame 280.

As an example, the reset device 254 is an elastic member, for example, a spring, though in some embodiments the reset device may be configured in other suitable forms according to actual needs. One end of the reset device 254 is connected to the base 252, and the other end is connected to the shredding body 210 or the frame 280, for example, fixed to a pin provided on the supporting part 282. The reset device 254 applies to the base 252 a force in the direction D4, so that the first branch 2522 tends to move toward the groove 2102 or remain in the groove 2102. In other words, the force generated by the reset device 254 tends to cause the locking mechanism 250 to lock the shredding body 210.

The provision of the reset device is advantageous. When materials are shredded, there is usually considerable vibration. This may cause the first branch 2522 to eject from the groove 2102, thereby unlocking the shredding body. The shredding body may be easily displaced or turned over as a result (for example, when working on a slope), and the motor and the cutter running at a high speed therein may be damaged or cause safety hazards. The reset device can prevent or reduce undesired unlocking caused by such vibration or due to other reasons, thereby increasing operation safety and preventing damage to the device and/or surrounding personnel.

Figure 12 shows a safety switch 260 according to some embodiments. The safety switch allows the power supply device to supply power to the shredding device when the collecting part is mounted on the bracket part, and prevents the power supply device from supplying electric power to the shredding device when the collecting part is removed from the bracket part. The safety switch may be provided, for example, in either the bracket part or the collecting part, the other of the bracket part and the collecting part may comprise a triggering component of the safety switch, and the triggering component may be, for example, a projecting part.

By way of example, as illustrated, the safety switch 260 is, for example, a mechanical switch or an electronic switch, and is provided on the supporting part 282. When the safety switch 260 is turned off, even if the main power switch is on, the power source cannot supply power to the motive power unit (for example, a motor). This can be achieved, for example, by arranging the safety switch in the series circuit of the motive power unit, or arranging the safety switch in an additional trigger circuit for the supply of power to the motive power unit. Other methods are also possible. Thus, the safety switch 260 provides an additional dimension of safety protection for the shredding device.

A triggering component 2862 is provided on the end surface of the collecting part 286 that faces the shredding body 210. In this embodiment, the triggering component 2862 is configured as a projecting part 2862. The position of the projecting part 2862 is designed to match the position of the safety switch 260, so that the projecting part 2862 can trigger the safety switch 260 to turn on the safety switch 260 only when the collecting part 286 is properly placed in the frame 280.

Hence, when the collecting part 286 is being pushed into the space defined by the frame 280 along the direction D5, the projecting part 2862 will not trigger the safety switch if the collecting part 286 is not pushed into the proper position. When the collecting part 286 is pushed into the proper position, the projecting part 2862 is in physical contact with the safety switch 260, thereby triggering the safety switch 260 and turning it on, thus allowing power to be supplied to the motive power unit.

The safety switch and the triggering component according to this embodiment are simple in design, and the feedback provided by the physical position of the collecting part itself is used as the trigger to control the power supply circuit of the motive power unit. This can accurately reflect the correct placement of the collecting part (because it is inherently required to be placed correctly), and does not require additional observation or detection components or circuits. For example, there is no need for the operator to observe and decide whether the collecting part has been properly placed before proceeding to the next step, for example, activating the safety switch.

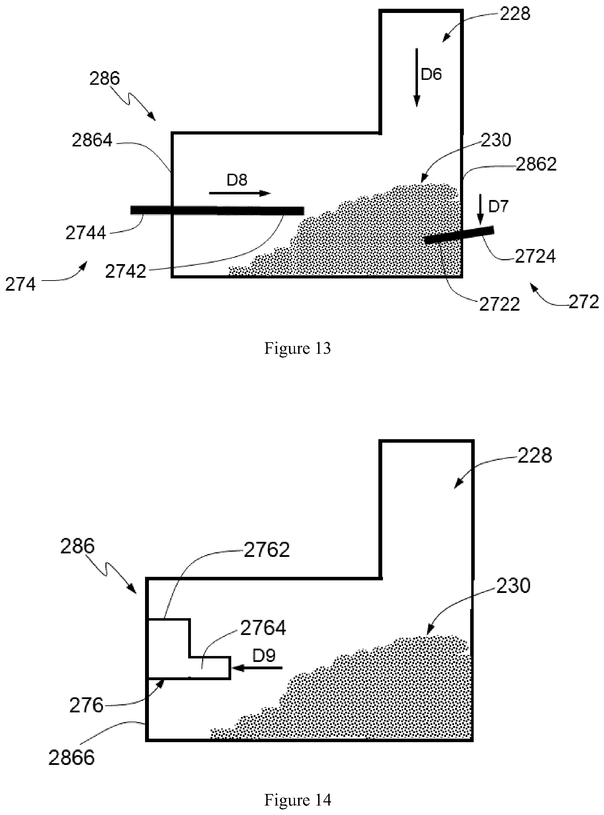

Figures 13 and 14 are schematic diagrams of the displacing mechanism of the shredding device according to some embodiments of the present invention.

During material treatment, as shown in Figure 13, the materials pass through the material passage 228 along the direction D6, and are shredded by the tool head to produce shredded materials 230. The shredded materials 230 are then discharged from the outlet of the housing of the shredding body (i.e., the port of the material passage 228 that is close to the collecting part 286), and are subsequently collected in the collecting part 286.

The shredded materials 230 tend to gather essentially below the material passage 228. This is disadvantageous. In the first place, as the shredded materials 230 accumulate, the region inside the collecting part 286 that is essentially below the material passage 228 will be filled up, and the outlet at the bottom end of the material passage 228 may thus be blocked. In the second place, this is a waste of the remaining space in the collecting part 286.

For this, some embodiments of the present invention propose a displacing mechanism to overcome these disadvantages. The displacing mechanism can move the shredded materials in the collecting part 286 from a first position to a second position. The first position is, for example, a position essentially below the material passage 228, and the second position is, for example, one or more other positions in the collecting part 286.

The displacing mechanism may be provided in an appropriate position according to actual needs, and may take an appropriate form. With reference to Figure 5, in some embodiments, the displacing mechanism 272 is, for example, configured in a plate shape, which may be made of a suitable material, for example, plastic, metal, or a combination thereof, etc. The displacing mechanism 272 passes through a side wall 2862 of the collecting part 286, which can be achieved by, for example, opening a hole in the side wall 2862. In some embodiments, the displacing mechanism 272 may be integrally provided with the collecting part 286, for example, as part of the collecting part 286.

The displacing mechanism 272 has a first end 2722 and a second end 2724. The first end 2722 is located inside the collecting part 286 and essentially below the material passage 228, and the second end 2724 is located outside the collecting part 286. The displacing mechanism 272 can rotate, with a point or a line or an interface at the junction with the side wall 2862 as the pivot position. For example, the user may use a hand or foot to press the second end 2724 to pivot it in the direction D7 or in the opposite direction, so that the first end 2722 will interact with the shredded materials 230 to drive the shredded materials 230 to one or more other positions.

In some embodiments, the first end 2722 is also provided with a hand (not shown). On a plane perpendicular to the direction from the first end 2722 to the second end 2724, the hand has a larger cross-sectional area than that of either end. The hand is beneficial for improving the efficiency and effect of the displacement of the shredded materials.

Continuing to refer to Figure 13, in some embodiments, the shredding device is provided with a displacing mechanism 274. The displacing mechanism 274 passes through a side wall 2864 of the collecting part 286, and the side wall 2864 is remote from the region below the material passage 228. The displacing mechanism 274 has a first end 2742 and a second end 2744. The first end 2742 is located inside the collecting part 286, and the second end 2744 is located outside the collecting part 286. The first end 2742 is provided with a gripping component, for example, a claw (not shown). The displacing mechanism 274 can move back and forth along the direction D8 or the opposite direction, thereby allowing the claw to grab shredded materials 230 and move them to one or more other positions.

The displacing mechanisms 272 and 274 are only exemplary. Both can be driven manually. In some embodiments, the displacing mechanism can be driven by non-human power, for example, by a machine. For example, in some embodiments, the displacing mechanism is driven by a motor and a corresponding transmission mechanism. In some embodiments, at least part of the displacing mechanism operably performs translational movement, rotational movement, or a combination of the two, to displace the shredded materials.

The displacing mechanism may also be provided in other forms. For example, Figure 14 illustrates a displacing mechanism 276. The displacing mechanism 276 operably produces air flow in the collecting part 286 to displace the shredded materials 230. The displacing mechanism 276 is arranged inside the collecting part 286 and is located near a side wall 2866, and it comprises a housing 2762 and a pipe 2764. A motive power unit (for example, a motor), an air flow generating device (for example, a fan), etc. are provided in the housing 2762. The displacing mechanism 276 can produce air flow along the direction D9, thereby displacing at least part of the shredded materials 230 from a position below the material passage 228 to one or more other positions, for example, a position close to the displacing mechanism 276.

In some embodiments, the air flow produced by the displacing mechanism 276 runs in the opposite direction to D9, and the shredded materials 230 are displaced to one or more other positions under the pressure of the air flow.

The displacing mechanism may take an appropriate form according to actual needs. For example, the displacing mechanism may comprise a displacing component that operably performs at least one of translational movement, pivotal movement and rotational movement in the collecting part. In some embodiments, the displacing mechanism comprises a blowing component that operably produces air flow in the collecting part to move shredded materials, for example, as illustrated in Figure 14. In some other embodiments, the displacing mechanism comprises a vibration component that operably vibrates the collecting part. For example, in some designs, the displacing mechanism or component as illustrated in Figure 13 may be configured as a vibration component, which can vibrate under the driving action of, for example, a motor or another driving component, and thereby interact with the shredded materials in the collecting part and displace at least part of the shredded materials in the collecting part. In some other embodiments, the displacing mechanism comprises a tilting component that operably tilts the collecting part. For example, in some embodiments, the tilting component is a jack, which may be provided outside the collecting part at the side close to the material passage outlet. The jack can raise the corresponding end of the collecting part to a certain height and tilt it, so that at least part of the shredded materials in the collecting part is displaced under the action of gravity.

In some embodiments, a detecting component for detecting the amount of shredded materials is provided in the collecting part 286. In some embodiments, the detecting component is, for example, an infrared sensor, which can detect the height of the shredded materials and transmit the height information to a control circuit. In some embodiments, the detecting component is, for example, a weight sensor, which can detect the weight of the shredded materials and transmit the weight information to the control circuit. The control circuit determines the status of the shredded materials in the collecting part based on the detected information, and takes appropriate measures, for example, removing (pouring out) the shredded materials, etc.

Those skilled in the art should understand that the embodiments herein are only for the purpose of exemplifying the present invention, and by no means limit the present invention.

In the drawings herein, in multiple embodiments, the same reference signs are used for the same or similar elements.

In addition, one drawing may show multiple elements. Those skilled in the art should understand that this is only for the purpose of simplicity and does not mean that each element is necessary. Those skilled in the art will understand that one or more elements in the same drawing may be optional or additional elements.

Unless otherwise defined, the technical and scientific terms used herein have the same meanings as commonly understood by those ordinarily skilled in the art of the present invention. The implementations of the present invention are illustrated in non-limiting examples. On the basis of the embodiments disclosed above, various variations that can be conceived by those skilled in the art fall within the scope of the claims.

## Claims

1. Shredding device, comprising:
a shredding body (110), used to shred materials;
a frame (180), used to support the shredding body (110);
a collecting part (186) connected to at least part of the shredding body (110) and for receiving or accommodating shredded materials; and
a power supply device, which provides electric power to the shredding body (110),
**characterized in that** the shredding body (110) comprises a housing 120), which is provided with a power supply chamber (130) for accommodating at least part of the power supply device (130), and preferably the shredding device further comprises a power supply cover (132), which seals the power supply chamber (130).

2. Shredding device according to Claim 1, **characterized in that** the power supply device comprises at least one battery pack (134) accommodated in the power supply chamber (130), and the power supply chamber (130) is arranged such that at least one long side of the battery pack (134) accommodated therein extends along a first direction.

3. Shredding device according to Claim 2, **characterized in that** the power supply device further comprises an AC power interface, the power supply device further comprises an input toggle switch used to select the battery pack (134) or an AC power source for power supply, and preferably the shredding device can charge the at least one battery pack (134) by use of the AC power interface.

4. Shredding device according to any of the preceding claims, **characterized in that** the shredding body (110) has a first position in which the shredding body (110) is located on the frame (180) and a second position in which at least part of the shredding body (110) is accommodated in the frame (180), and preferably the shredding body (110) is configured to be able to rotate about a first axis so as to switch between the first position and the second position.

5. Shredding device according to Claim 4, **characterized in that** the first axis is parallel to the first direction.

6. Shredding device according to Claim 2, **characterized in that** the at least one battery pack (134) provides DC power output at 18V, 20V, 36V, 40V, 58V, 60V, 72V or 80V.

7. Shredding device according to any of the preceding claims, **characterized in that** a safety interface used to receive a safety component (135) is provided in the power supply chamber (130), and preferably the safety interface is configured such that the power supply device is allowed to supply electric power to the shredding device when the safety component (135) is connected to the safety interface and the power supply device is prevented from supplying electric power to the shredding device when the safety component (135) disengages from the safety interface.

8. Shredding device according to any of the preceding claims, **characterized in that** the frame (180) comprises a bracket part (184) and a collecting part (186) that is mounted on the bracket part (184) and is preferably removable, and the collecting part (186) is used to receive materials treated by the shredding body (110).

9. Shredding device according to Claim 8, **characterized in that** the shredding device further comprises a safety switch (260), which allows the power supply device to supply electric power to the shredding device when the collecting part (186) is mounted on the bracket part (184) and prevents the power supply device from supplying electric power to the shredding device when the collecting part (186) is removed from the bracket part (184).

10. Shredding device according to Claim 9, **characterized in that** the safety switch (260) is provided in either the bracket part (184) or the collecting part (186), the other of the bracket part (184) and the collecting part (186) comprises a triggering component (2862) of the safety switch (260), and the triggering component (2862) is preferably a projecting part.

11. Shredding device according to any of the preceding claims, **characterized in that** a heat dissipation mechanism (129) is provided on the housing (120) of the shredding body (110), preferably the heat dissipation mechanism (129) comprises a heat dissipation hole, and preferably the heat dissipation mechanism (129) further comprises a filtering mechanism.

12. Shredding device according to any of the preceding claims, **characterized in that** the shredding device comprises a mechanism (190) used to receive accessory tools, and preferably the accessory tools include one or more of a wrench (192), a plunger, a screwdriver, pliers, screws, nuts and bolts.

13. Shredding device according to Claim 12, **characterized in that** the mechanism (190) used to receive accessory tools comprises a space (1902) for accommodating at least part of the accessory tools, or a protruding part used to carry at least part of the accessory tools, or both.

14. Shredding device according to any of the preceding claims, **characterized in that** the housing (120) comprises a window (172), which allows observation of at least part of the inside of the shredding mechanism (162).

15. Shredding device according to any of the preceding claims, **characterized in that** the shredding body (110) comprises a tool head (224) used to shred materials and a motive power unit (226) used to provide motive power to the tool head (224), the motive power unit (226) is preferably a motor, and the motor is preferably an external rotor motor.

## Patentansprüche

1. Zerkleinerungsvorrichtung, umfassend:
einen Zerkleinerungskörper (110), der zum Zerkleinern von Zerkleinerungsgut Anwendung findet;
einen Rahmen (180), der zum Abstützen des Zerkleinerungskörpers (110) Anwendung findet;
ein Auffangteil (186), das mit zumindest einem Teil des Zerkleinerungskörpers (110) verbunden ist und zum Aufnehmen oder Unterbringen von Zerkleinerungsgut dient; und
einer Stromversorgungseinrichtung, die den Zerkleinerungskörper (110) mit elektrischer Energie versorgt,
**dadurch gekennzeichnet, dass** der Zerkleinerungskörper (110) ein Gehäuse (120) umfasst, das mit einer Stromversorgungskammer (130) zum Unterbringen von zumindest einem Teil der Stromversorgungseinrichtung (130) versehen ist, wobei vorzugsweise die Zerkleinerungsvorrichtung ferner eine Stromversorgungsabdeckung (132) umfasst, die die Stromversorgungskammer (130) verschließt.

2. Zerkleinerungsvorrichtung nach Anspruch 1,
**dadurch gekennzeichnet, dass** die Stromversorgungseinrichtung zumindest einen in der Stromversorgungskammer (130) untergebrachten Batteriepack (134) umfasst und die Stromversorgungskammer (130) so angeordnet ist, dass zumindest eine Langseite des darin untergebrachten Batteriepacks (134) sich entlang einer ersten Richtung erstreckt.

3. Zerkleinerungsvorrichtung nach Anspruch 2,
**dadurch gekennzeichnet, dass** die Stromversorgungseinrichtung ferner eine Wechselstromschnittstelle umfasst, wobei die Stromversorgungseinrichtung ferner einen Eingangsumschalter umfasst, der zum Auswählen des Batteriepacks (134) oder einer Wechselstromquelle für die Stromversorgung verwendet wird, und wobei vorzugsweise die Zerkleinerungsvorrichtung den zumindest einen Batteriepack (134) unter Verwendung der Wechselstromschnittstelle laden kann.

4. Zerkleinerungsvorrichtung nach einem der vorstehenden Ansprüche,
**dadurch gekennzeichnet, dass** der Zerkleinerungskörper (110) eine erste Position, in der sich der Zerkleinerungskörper (110) auf dem Rahmen (180) befindet, und eine zweite Position aufweist, in der zumindest ein Teil des Zerkleinerungskörpers (110) in dem Rahmen (180) untergebracht ist, wobei vorzugsweise der Zerkleinerungskörper (110) so ausgelegt ist, dass er sich um eine erste Achse drehen kann, um zwischen der ersten Position und der zweiten Position zu wechseln.

5. Zerkleinerungsvorrichtung nach Anspruch 4,
**dadurch gekennzeichnet, dass** die erste Achse parallel zur ersten Richtung verläuft.

6. Zerkleinerungsvorrichtung nach Anspruch 2,
**dadurch gekennzeichnet, dass** der zumindest eine Batteriepack (134) eine Gleichstromausgangsleistung von 18 V, 20 V, 36 V, 40 V, 58 V, 60 V, 72 V oder 80 V bereitstellt.

7. Zerkleinerungsvorrichtung nach einem der vorstehenden Ansprüche,
**dadurch gekennzeichnet, dass** eine Sicherheitsschnittstelle zum Aufnehmen einer Sicherheitskomponente (135) in der Stromversorgungskammer (130) vorgesehen ist, wobei vorzugsweise die Sicherheitsschnittstelle so ausgelegt ist, dass die Stromversorgungseinrichtung die Zerkleinerungsvorrichtung mit elektrischer Energie versorgen kann, wenn die Sicherheitskomponente (135) mit der Sicherheitsschnittstelle verbunden ist, und die Stromversorgungseinrichtung daran gehindert wird, die Zerkleinerungsvorrichtung mit elektrischer Energie zu versorgen, wenn die Sicherheitskomponente (135) von der Sicherheitsschnittstelle freigegeben ist.

8. Zerkleinerungsvorrichtung nach einem der vorstehenden Ansprüche,
**dadurch gekennzeichnet, dass** der Rahmen (180) ein Halterungsteil (184) und ein Auffangteil (186) umfasst, das an dem Halterungsteil (184) angebracht und vorzugsweise abnehmbar ausgebildet ist, wobei das Auffangteil (186) dazu dient, von dem Zerkleinerungskörper (110) bearbeitetes Zerkleinerungsgut aufzunehmen.

9. Zerkleinerungsvorrichtung nach Anspruch 8,
**dadurch gekennzeichnet, dass** die Zerkleinerungsvorrichtung ferner einen Sicherheitsschalter (260) umfasst, der es der Stromversorgungseinrichtung ermöglicht, die Zerkleinerungsvorrichtung dann mit elektrischer Energie zu versorgen, wenn das Auffangteil (186) an dem Halterungsteil (184) angebracht ist, und der verhindert, dass die Stromversorgungseinrichtung die Zerkleinerungsvorrichtung mit elektrischer Energie versorgt, wenn das Auffangteil (186) von dem Halterungsteil (184) abgenommen ist.

10. Zerkleinerungsvorrichtung nach Anspruch 9,
**dadurch gekennzeichnet, dass** der Sicherheitsschalter (260) entweder in dem Halterungsteil (184) oder in dem Auffangteil (186) vorgesehen ist, wobei das andere Teil aus Halterungsteil (184) und Auffangteil (186) eine Auslösekomponente (2862) für den Sicherheitsschalter (260) umfasst und die Auslösekomponente (2862) vorzugsweise ein vorspringendes Teil ist.

11. Zerkleinerungsvorrichtung nach einem der vorstehenden Ansprüche,
**dadurch gekennzeichnet, dass** ein Wärmeableitungsmechanismus (129) an dem Gehäuse (120) des Zerkleinerungskörpers (110) vorgesehen ist, wobei der Wärmeableitungsmechanismus (129) vorzugsweise eine Wärmeableitungslochung aufweist und wobei vorzugsweise der Wärmeableitungsmechanismus (129) ferner einen Filtermechanismus umfasst.

12. Zerkleinerungsvorrichtung nach einem der vorstehenden Ansprüche,
**dadurch gekennzeichnet, dass** die Zerkleinerungsvorrichtung einen Mechanismus (190) zum Aufnehmen von Zusatzwerkzeugen umfasst, wobei vorzugsweise die Zusatzwerkzeuge ein oder mehrere der folgenden Werkzeuge umfassen: einen Schraubenschlüssel (192), einen Stößel, einen Schraubendreher, eine Zange, Schrauben, Muttern und Bolzen.

13. Zerkleinerungsvorrichtung nach Anspruch 12,
**dadurch gekennzeichnet, dass** der Mechanismus (190) zum Aufnehmen von Zusatzwerkzeugen einen Raum (1902) zum Unterbringen von zumindest einem Teil der Zusatzwerkzeuge oder ein vorspringendes Teil zum Tragen von zumindest einem Teil der Zusatzwerkzeuge oder beides umfasst.

14. Zerkleinerungsvorrichtung nach einem der vorstehenden Ansprüche,
**dadurch gekennzeichnet, dass** das Gehäuse (120) ein Fenster (172) aufweist, das die Betrachtung von zumindest einem Teil des Inneren des Zerkleinerungsmechanismus (162) ermöglicht.

15. Zerkleinerungsvorrichtung nach einem der vorstehenden Ansprüche,
**dadurch gekennzeichnet, dass** der Zerkleinerungskörper (110) einen Werkzeugkopf (224) zum Zerkleinern von Zerkleinerungsgut und eine Antriebseinheit (226) zum Bereitstellen von Antriebskraft für den Werkzeugkopf (224) umfasst, wobei die Antriebseinheit (226) vorzugsweise ein Motor ist und der Motor vorzugsweise ein Außenläufermotor ist.

## Revendications

1. Dispositif de broyage, comprenant :
un corps de broyage (110), utilisé pour broyer des matériaux ;
un châssis (180), utilisé pour supporter le corps de broyage (110) ;
une partie collectrice (186) reliée à au moins une partie du corps de broyage (110) et destinée à recevoir ou à loger les matériaux broyés ; et
un dispositif d'alimentation électrique qui fournit de l'énergie électrique au corps de broyage (110),
**caractérisé en ce que** le corps de broyage (110) comprend un boîtier (120) qui est muni d'une chambre d'alimentation électrique (130) destinée à loger au moins une partie du dispositif d'alimentation électrique (130), et de préférence, le dispositif de broyage comprend en outre un couvercle d'alimentation électrique (132) qui obture la chambre d'alimentation électrique (130).

2. Dispositif de broyage selon la revendication 1,
**caractérisé en ce que** le dispositif d'alimentation électrique comprend au moins un bloc-batterie (134) logé dans la chambre d'alimentation électrique (130), et la chambre d'alimentation électrique (130) est agencée de telle sorte qu'au moins un côté long du bloc-batterie (134) qui y est logé s'étende le long d'une première direction.

3. Dispositif de broyage selon la revendication 2,
**caractérisé en ce que** le dispositif d'alimentation électrique comprend en outre une interface d'alimentation en courant alternatif, le dispositif d'alimentation électrique comprend en outre un commutateur à bascule d'entrée utilisé pour sélectionner le bloc-batterie (134) ou une source d'alimentation en courant alternatif pour l'alimentation électrique, et de préférence, le dispositif de broyage peut charger ledit au moins un bloc-batterie (134) à l'aide de l'interface d'alimentation en courant alternatif.

4. Dispositif de broyage selon l'une des revendications précédentes,
**caractérisé en ce que** le corps de broyage (110) a une première position dans laquelle le corps de broyage (110) est situé sur le châssis (180) et une deuxième position dans laquelle au moins une partie du corps de broyage (110) est logée dans le châssis (180), et de préférence, le corps de broyage (110) est conçu de manière à pouvoir tourner autour d'un premier axe afin de commuter entre la première position et la deuxième position.

5. Dispositif de broyage selon la revendication 4,
**caractérisé en ce que** le premier axe est parallèle à la première direction.

6. Dispositif de broyage selon la revendication 2,
**caractérisé en ce que** ledit au moins un bloc-batterie (134) fournit une puissance de sortie en courant continu à 18 V, 20 V, 36 V, 40 V, 58 V, 60 V, 72 V ou 80 V.

7. Dispositif de broyage selon l'une des revendications précédentes,
**caractérisé en ce qu'**une interface de sécurité utilisée pour recevoir un composant de sécurité (135) est prévue dans la chambre d'alimentation électrique (130), et de préférence, l'interface de sécurité est conçue de telle sorte que le dispositif d'alimentation électrique est autorisé à fournir de l'énergie électrique au dispositif de broyage lorsque le composant de sécurité (135) est connecté à l'interface de sécurité et que le dispositif d'alimentation électrique est empêché de fournir de l'énergie électrique au dispositif de broyage lorsque le composant de sécurité (135) est désengagé de l'interface de sécurité.

8. Dispositif de broyage selon l'une des revendications précédentes,
**caractérisé en ce que** le châssis (180) comprend une partie support (184) et une partie collectrice (186) qui est montée sur la partie support (184) et qui est de préférence amovible, et la partie collectrice (186) est utilisée pour recevoir les matériaux traités par le corps de broyage (110).

9. Dispositif de broyage selon la revendication 8,
**caractérisé en ce que** le dispositif de broyage comprend en outre un interrupteur de sécurité (260) qui permet au dispositif d'alimentation électrique de fournir de l'énergie électrique au dispositif de broyage lorsque la partie collectrice (186) est montée sur la partie support (184), et qui empêche le dispositif d'alimentation électrique de fournir de l'énergie électrique au dispositif de broyage lorsque la partie collectrice (186) est retirée de la partie support (184).

10. Dispositif de broyage selon la revendication 9,
**caractérisé en ce que** l'interrupteur de sécurité (260) est prévu soit dans la partie support (184), soit dans la partie collectrice (186), l'autre élément parmi la partie support (184) et la partie collectrice (186) comprend un composant de déclenchement (2862) de l'interrupteur de sécurité (260), et le composant de déclenchement (2862) est de préférence une partie en saillie.

11. Dispositif de broyage selon l'une des revendications précédentes,
**caractérisé en ce qu'**un mécanisme de dissipation thermique (129) est prévu sur le boîtier (120) du corps de broyage (110), de préférence le mécanisme de dissipation thermique (129) présente un trou de dissipation thermique, et de préférence le mécanisme de dissipation thermique (129) comprend en outre un mécanisme de filtrage.

12. Dispositif de broyage selon l'une des revendications précédentes,
**caractérisé en ce que** le dispositif de broyage comprend un mécanisme (190) utilisé pour recevoir des outils accessoires, et de préférence, les outils accessoires comprennent un ou plusieurs des éléments suivants : une clé (192), un piston, un tournevis, des pinces, des vis, des écrous et des boulons.

13. Dispositif de broyage selon la revendication 12,
**caractérisé en ce que** le mécanisme (190) utilisé pour recevoir des outils accessoires comprend un espace (1902) destiné à loger au moins une partie des outils accessoires, ou une partie en saillie utilisée pour porter au moins une partie des outils accessoires, ou les deux.

14. Dispositif de broyage selon l'une des revendications précédentes,
**caractérisé en ce que** le boîtier (120) présente une fenêtre (172) qui permet d'observer au moins une partie de l'intérieur du mécanisme de broyage (162).

15. Dispositif de broyage selon l'une des revendications précédentes,
**caractérisé en ce que** le corps de broyage (110) comprend une tête d'outil (224) utilisée pour broyer des matériaux et une unité d'entraînement (226) utilisée pour fournir une force motrice à la tête d'outil (224), l'unité d'entraînement (226) étant de préférence un moteur, et le moteur étant de préférence un moteur à rotor externe.
